# EUROPÄISCHE PATENTSCHRIFT

(11) **EP 1 508 483 B1**
(45) Veröffentlichungstag und Bekanntmachung des Hinweises auf die Patenterteilung: **07.01.2009**
(21) Anmeldenummer: 03018551.6
(22) Anmeldetag: 18.08.2003
(51) Int. Cl.: B60R 21/06

(54) **Kfz-Sicherheitseinrichtung, insbesondere Kfz-Sicherheitsnetz**
Motor vehicle arrangement, particularly a motor vehicle safety net
Filet de sécurité pour un véhicule automobile

(43) Veröffentlichungstag der Anmeldung: 23.02.2005
(73) Patentinhaber: BOS GmbH & Co. KG, 73760 Ostfildern (DE)
(72) Erfinder: Crisp, Terence Sam, B-3140 Keerbergen (BE)
(74) Vertreter: Patentanwälte Ruff, Wilhelm, Beier, Dauster & Partner

(56) Entgegenhaltungen:
- DE-A- 10 127 463
- DE-A- 10 207 575
- DE-A- 19 849 927
- DE-C- 19 708 192

## Beschreibung

Die Erfindung betrifft eine Kfz-Sicherheitseinrichtung, insbesondere ein Kfz-Sicherheitsnetz, gemäß dem Oberbegriff des Anspruchs 1.

Kfz-Sicherheitseinrichtungen, zu denen auch Laderaumabdeckungen und im weitesten Sinne auch Sonnenrollos gehören, sind bekannt und weit verbreitet. Beispielsweise dienen die Kfz-Sicherheitseinrichtungen dazu, die Kfz-Fahrgastzelle von dem Kfz-Laderaum zu trennen, um zu verhindern, dass im Falle starker Beschleunigungen, beispielsweise bei einem starken Abbremsen des Fahrzeuges oder im Falle eines Crashs, Ladegüter aus dem Laderaum in die Fahrgastzelle hinein geschleudert werden. Üblicherweise sind Kfz-Sicherheitsnetze in einem Rollogehäuse angeordnet, welches an der zum Laderaum hingewandten Seite der Rückenlehne des hinteren Fahrgastsitzes angeordnet ist.
Das Sicherheitsnetz ist von einer aufgewickelten Ruhelage in eine aufgespannte Gebrauchslage entsprechend einer vorbestimmten Ausziehlänge der Werkstoffbahn überführbar, wozu beispielsweise ein an einem freien Endbereich der Werkstoffbahn angeordnetes Endelement, wie eine Haltestange, kraftfahrzeugseitig festgelegt werden kann. In aufgespanntem Zustand versperrt das Kfz-Sicherheitsnetz die zwischen dem oberen Rand der Rückenlehne und dem Kfz-Himmel ansonsten verbleibende Öffnung.

Bei den überaus meisten Anwendungsfällen ist darüber hinaus vorgesehen, dass die Rückenlehne des hinteren Fahrzeugsitzes in Fahrtrichtung nach vorn verschwenkt werden kann, beispielsweise um eine größere Ladefläche bereitzustellen. Auch bei nach vorn verschwenkter, im wesentlichen horizontal angeordneter Rückenlehne ist das Kfz-Sicherheitsnetz aufspannbar und kann eine Gebrauchslage einnehmen, in der es den Laderaum von der Fahrgastzelle trennt. Da das an der Rückenlehne befestigte Rollogehäuse in dieser Stellung vom Kfz-Himmel weiter entfernt ist als bei der zuvor beschriebenen Situation, ist die Gesamtlänge der auf der Wickelwelle gelagerten Werkstoffbahn an diesen längeren Abstand angepasst. Mit anderen Worten: Für den Fall, dass die Rückenlehne sich im wesentlichen in vertikaler Position befindet und das Kfz-Sicherheitsnetz bis zu einer vorbestimmten, geringeren Ausziehlänge ausgezogen und aufgespannt ist, befindet sich auf der Wickelwelle noch überschüssiges Material der Werkstoffbahn, welches von der Wickelwelle abgezogen werden könnte, wenn Ladegüter aufgrund starker Beschleunigungen in das Sicherheitsnetz hineingeschleudert werden.

Um ein Abwickeln dieser Werkstoffbahn-Überlänge bei aufgespannter Werkstoffbahn zu verhindern, sind im Stand der Technik bereits eine Reihe von Sperreinrichtungen beschrieben worden, die dafür sorgen, daß eine solche Abziehbewegung durch eine Verriegelung der Wickelwelle nicht möglich ist. Beispielsweise zeigt der Stand der Technik bereits Sperreinrichtungen, die zunächst, vor dem initialen Abziehen der Werkstoffbahn aus ihrer aufgewickelten Ruheposition heraus, manuell entriegelt werden müssen. Derartige Vorrichtungen werden als unkomfortabel angesehen.

Um eine höchstmögliche Sicherheit zu garantieren, ist von der Anmelderin bereits ein Kfz-Sicherheitsnetz entwickelt worden, welches in der DE 198 49 927 C1 beschrieben ist. Dieses System sorgt bereits für einen hohen Komfort, da kein gesondertes Betätigungselement mehr notwendig ist. Die Werkstoffbahn kann aus ihrer aufgewickelten Ruhelage heraus abgezogen werden und unter Verwendung eines Zeitverzögerungsmechanismusses erfolgt nach Erreichen einer der Einhängeposition entsprechenden Ausziehlänge der Werkstoffbahn automatisch immer eine Sperrung der Wickelwelle, so dass keine Überlänge der Werkstoffbahn abgezogen werden kann.

Um die zuletzt beschriebene Kfz-Sicherheitseinrichtung hinsichtlich der Zahl ihrer Einzelteile zu reduzieren und um eine insgesamt einfachere Montage möglich zu machen, wurde eine weitere Kfz-Sicherheitseinrichtung entwickelt, die in der nachveröffentlichten DE 101 27 463 der Anmelderin beschrieben ist. Hier ist ein wenigstens mittelbar durch Reibschluss auf Drehmitnahme mit der Wickelwelle gekoppeltes Betätigungselement für die Sperrklinke vorgesehen, welches während der Ausziehbewegung der Werkstoffbahn die Sperrklinke zumindest dann in ihrer Freilaufstellung hält, wenn der Zählmechanismus ein Einfallen der Sperrklinke in ihre Sperrstellung hinein ermöglicht. Entscheidend ist hier eine beim Einhängen des Kfz-Sicherheitsnetzes in üblicher Weise erfolgende kurze Rückbewegung.

Ausgehend von der Kfz-Sicherheitseinrichtung gemäß der DE 198 49 927 C1 besteht die Aufgabe der Erfindung darin, eine einfach aufgebaute Kfz-Sicherheitseinrichtung bereitzustellen, die mit einer geringen Zahl von Einzelteilen auskommt und dabei eine hohe Sicherheit bietet.

Die Erfindung löst diese Aufgabe mit den Merkmalen des Anspruchs 1, insbesondere mit denen des Kennzeichenteils, und ist demgemäß dadurch gekennzeichnet, daß der Sperrklinke ein Bewegungsverzögerer zugeordnet ist, der die Einfallbewegung der Sperrklinke von ihrer Freilaufstellung in ihre Sperrstellung hinein verlangsamt.

Das Prinzip der Erfindung besteht somit im wesentlichen darin, nunmehr unmittelbar der Sperrklinke einen Bewegungsverzögerer zuzuordnen, der die Einfallbewegung der Sperrklinke in ihre Sperrposition hinein verlangsamt. Die Steuerkurve kann in einfacher Weise dabei derart ausgebildet sein, dass sie bis auf eine Ausnehmung kreisförmig ausgebildet ist und über die gesamte Ausziehbewegung der Werkstoffbahn bis zum Erreichen der vorbestimmten Ausziehlänge ein Einfallen der Sperrklinke in ihre Sperrposition hinein verhindert, wobei bei Erreichen der vorbestimmten Ausziehlänge, die einer Einhängeposition der Werkstoffbahn entspricht, eine Position der Steuerkurve, beispielsweise eine Umfangs-Drehposition erreicht wird, in der diese Ausnehmung so angeordnet ist, dass ein Einfallen der Sperrklinke in ihre Sperrposition hinein möglich ist. Dieser Einfallvorgang wird jedoch von einem Bewegungsverzögerer verlangsamt, der unmittelbar mit der Sperrklinke zusammenwirkt, so daß eine Sperrklinke nicht sofort einfällt. Der Benutzer kann somit die Werkstoffbahn ausziehen, beispielsweise die Haltestange des Sicherheitsnetzes einhängen und anschließend sorgt der Bewegungsverzögerer für eine automatische Arretierung.

Für den Fall, dass die Rückenlehne des Fahrzeugsitzes in ihre im wesentlichen horizontale Position verschwenkt ist, so dass ein größerer Vorrat an Werkstoffbahn von der Wickelwelle abgezogen werden muss, sorgt der Bewegungsverzögerer dafür, dass die Sperrklinke beim Ausziehen der Werkstoffbahn nicht in ihre Sperrposition hinein einfällt, sondern auch die Überlänge an Werkstoffbahn abgezogen werden kann. Die Steuerkurve durchläuft dabei beispielsweise einen Drehwinkel von mehr als 360°. Ein mit der Sperrklinke beispielsweise fest verbundener Steuerbolzen kann derart schnell relativ zu der Ausnehmung der Steuerkurve an dieser Ausnehmung vorbeibewegt werden, dass eine Einfallbewegung der Sperrklinke in ihre Sperrposition hinein nicht stattfindet.

Durch die Anordnung eines Bewegungsverzögerers, der der Sperrklinke zugeordnet ist, kann die beim Stand der Technik verhältnismäßig aufwendige Anordnung mit mehreren Federelementen entfallen. Bei einem Ausführungsbeispiel der DE 198 49 927, welches dort in den Figuren 8 bis 13 dargestellt ist, ist neben einem Nockenelement noch eine Nockenscheibe vorgesehen. Sowohl Nockenelement wie auch Nockenscheibe können die Einfallbewegung der Sperrklinke in ihre Sperrposition hinein verhindern. Ein Zeitverzögerungsglied wirkt hier auf die Verdrehbewegung der Nockenscheibe relativ zu der Wickelwelle ein.

Bei der erfindungsgemäßen Vorrichtung kann dieser zweite Mechanismus, der eine Vielzahl von Einzelteilen erfordert, praktisch vollständig entfallen. Erfindungsgemäß ist nur noch ein einziges Nockenelement notwendig, da der Bewegungsverzögerer der Sperrklinke zugeordnet ist. Das Nockenelement, welches die Steuerkurve trägt, kann unmittelbar von einem drehfest mit der Wickelwelle verbundenen Antriebsrad angetrieben werden. Die jeweilige Umfangsdrehposition des Antriebsrades wie auch des angetriebenen Nockenelementes korrelieren auf diese Weise unmittelbar mit der Umfangs-Drehposition der Wickelwelle bzw. mit der jeweiligen Ausziehlänge der Werkstoffbahn. Eine Zwischenschaltung von Federelementen ist insoweit entbehrlich.

Mit der erfindungsgemäßen Kfz-Sicherheitseinrichtung ist ein Aufbau möglich, der mit deutlich weniger Einzelteilen auskommt. Die Kfz-Sicherheitseinrichtung ist mit nur geringem Aufwand konstruierbar und montierbar. Zugleich bietet die erfindungsgemäße Kfz-Sicherheitseinrichtung eine hohe Sicherheit, da die Sperrklinke automatisch, wenn die vorbestimmte Ausziehlänge erreicht wird,-zeitverzögert - in die Sperrposition einfällt.

Die erfindungsgemäße Kfz-Sicherheitseinrichtung läßt darüber hinaus die Möglichkeit zu, daß ein Benutzer die Werkstoffbahn über die vorbestimmte Ausziehlänge hinaus auszieht und zwar insbesondere für den Fall, daß die Wickelwelle fest relativ zu einer verschwenkbaren Kfz-Rückenlehne des hinteren Fahrzeugsitzes angeordnet ist. Für den Fall, daß diese Rückenlehne in Fahrtrichtung nach vorn, also in eine im wesentlichen horizontale Position verschwenkt wird und dementsprechend ein größerer Abstand zwischen der Wickelwelle und den kfz-seitig vorgesehenen Einhänge-Aufnahmen entsprechend einer zweiten Ausziehlänge, die größer ist als die vorbestimmte Ausziehlänge, besteht, kann die Werkstoffbahn ohne Behinderung bis zu dieser zweiten Ausziehlänge ausgezogen werden. Da der Bewegungsverzögerer ein unmittelbares Einfallen der Sperrklinke verhindert, wird ein weiteres Abziehen der Werkstoffbahn über die vorbestimmte Ausziehlänge hinaus nicht gesperrt, wenn der Ausziehvorgang kontinuierlich erfolgt.

Zugleich kann vorgesehen sein, daß der gesamte Vorrat an Werkstoffbahn, der auf der Wickelwelle gelagert ist, in seiner Länge der zweiten Ausziehlänge entspricht. Für den Fall, daß die Werkstoffbahn in einer Gebrauchslage entsprechend der zweiten Ausziehlänge ausgezogen ist, befindet sich insoweit kein zusätzlicher Vorrat der Werkstoffbahn auf der Wickelwelle, so daß in diesem Falle kein gesonderter Sperrmechanismus benötigt wird.

Gemäß einer vorteilhaften Ausgestaltung der Erfindung ist die Sperrklinke schwenkbar ausgebildet. Diese Ausgestaltung ermöglicht eine besonders einfache Konstruktion und ein vorteilhaftes Zusammenwirken mit Sperrzähnen der Rastscheibe. Außerdem kann auf diese Weise besonders einfach ein Steuerhebel mit der Sperrklinke zusammenwirken, der Teil des Bewegungsverzögerers sein kann.

Gemäß einer weiteren vorteilhaften Ausgestaltung der Erfindung wirkt mit der Sperrklinke ein Steuerhebel zusammen, der gemeinsam mit der Sperrklinke um die Achse der Sperrklinke schwenkbar ist. Auf diese Weise wird der Sperrklinke ohne aufwendige Maßnahmen ein Steuerelement zugeordnet, welches mit dem Bewegungsverzögerer zusammenwirken kann.

Gemäß einer weiteren vorteilhaften Ausgestaltung der Erfindung ist dem Steuerhebel eine Verzögerungsfläche, insbesondere eine Verzögerungsverzahnung zugeordnet. Als Verzögerungsfläche wird zunächst eine geometrische Fläche beliebiger Form bezeichnet, die mit dem Bewegungsverzögerer zusammenarbeitet, und insoweit die Verzögerung der Einfallbewegung der Sperrklinke von dem Bewegungsverzögerer auf die Sperrklinke überträgt. Es kann sich dabei beispielsweise um eine Reibfläche handeln. In besonderer Ausgestaltung der Erfindung ist die Verzögerungsfläche als Verzögerungsverzahnung ausgebildet.

Die Ausgestaltung bietet insbesondere die Möglichkeit, die Verzögerungsfläche an einem von der Schwenkachse des Steuerhebels entfernten Ende des Steuerhebels anzuordnen, so daß günstige Kräfteverhältnisse erreicht werden. Insgesamt kann auf diese Weise eine besonders einfache Konstruktion erreicht werden.

Gemäß einer weiteren vorteilhaften Ausgestaltung der Erfindung ist das Nockenelement drehgelagert. Diese Ausgestaltung ermöglicht auf besonders einfache Weise eine Steuerkurve, die sich über einen Drehwinkel des Nockenelements von etwa 360 Grad erstreckt. Insbesondere ermöglicht diese Ausgestaltung eine besonders einfache Ausbildung derart, daß eine Ausziehbewegung der Werkstoffbahn bis zu der vorbestimmten Ausziehlänge etwa einer Drehung des Nockenelementes um nahezu 360 Grad entspricht und eine Ausziehbewegung der Werkstoffbahn bis zu einer zweiten Ausziehlänge einer Drehung des Nockenelementes um mehr als 360 Grad entspricht.

Gemäß einer weiteren vorteilhaften Ausgestaltung der Erfindung weist das Nockenelement eine Steuerkurve auf, die sich über einen Drehwinkelbereich von etwa 360 Grad erstreckt. Diese Ausgestaltung der Erfindung bietet die Möglichkeit einer besonders einfachen Ausbildung des Nockenelementes mit Steuerkurve und ermöglicht eine besonders einfache Konstruktion der erfindungsgemäßen Kfz-Sicherheitseinrichtung.

Bei einer weiteren vorteilhaften Ausgestaltung der Erfindung entspricht eine Ausziehbewegung der Werkstoffbahn bis zu der vorbestimmten Ausziehlänge im wesentlichen der Drehung der Steuerkurve um nahezu 360 Grad. Diese Ausgestaltung bietet die Möglichkeit einer besonders einfachen Konstruktion sowie einer besonders einfachen Montage der Kfz-Sicherheitseinrichtung.

Gemäß einer weiteren vorteilhaften Ausgestaltung der Erfindung entspricht die Ausziehbewegung der Werkstoffbahn bis zu einer zweiten Ausziehlänge, die größer ist als die vorbestimmte Ausziehlänge einer Drehung der Steuerkurve um mehr als 360 Grad. Auf diese Weise wird eine konstruktiv besonders einfache Lösung möglich, die ein kontinuierliches Ausziehen der Werkstoffbahn über die vorbestimmte Ausziehlänge hinaus bei Bedarf ermöglicht.

Weitere Vorteile ergeben sich aus den nicht zitierten Unteransprüchen sowie an Hand der nun folgenden Beschreibung eines in den Zeichnungen dargestellten Ausführungsbeispiels. In den Figuren zeigen:
- Fig. 1: schematisch in teilgeschnittener Seitenansicht den Innenraum eines Kfz's im Bereich des hinteren Fahrzeugsitzes, mit in zwei unterschiedlichen Gebrauchslagen dargestellter Sitz-Rückenlehne,
- Fig. 2: schematisch in perspektivischer Explosionsansicht die Bauteile eines Ausführungsbeispiels der erfindungsgemäßen Kfz-Sicherheitseinrichtung,
- Fig. 3: in schematischer, teilgeschnittener Seitenansicht etwa gemäß Ansichtspfeil III in Fig. 2 die zusammengebaute Anordnung der Fig. 2 mit in Freilaufstellung befindlicher Sperrklinke, und
- Fig. 4: eine Darstellung gemäß Fig. 3 mit in Sperrstellung befindlicher Sperrklinke.

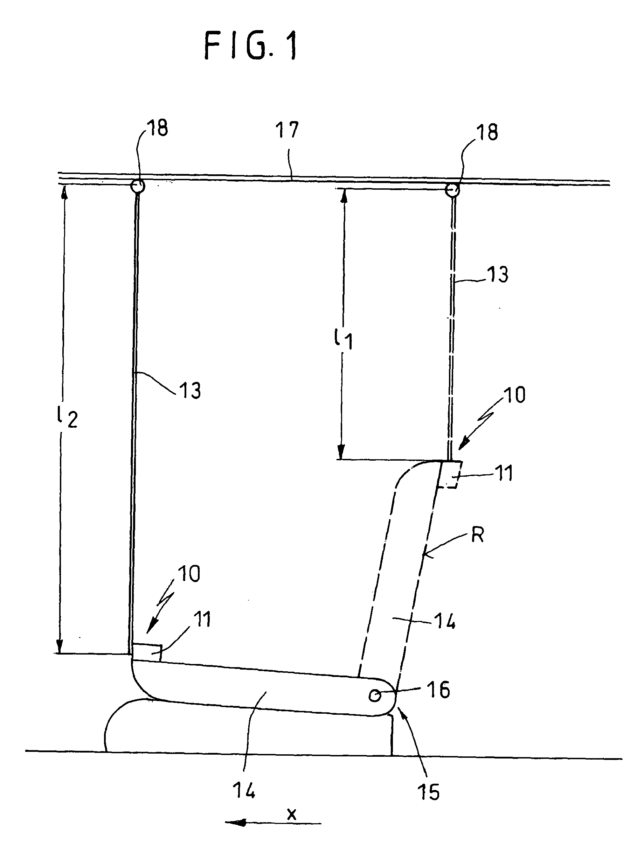

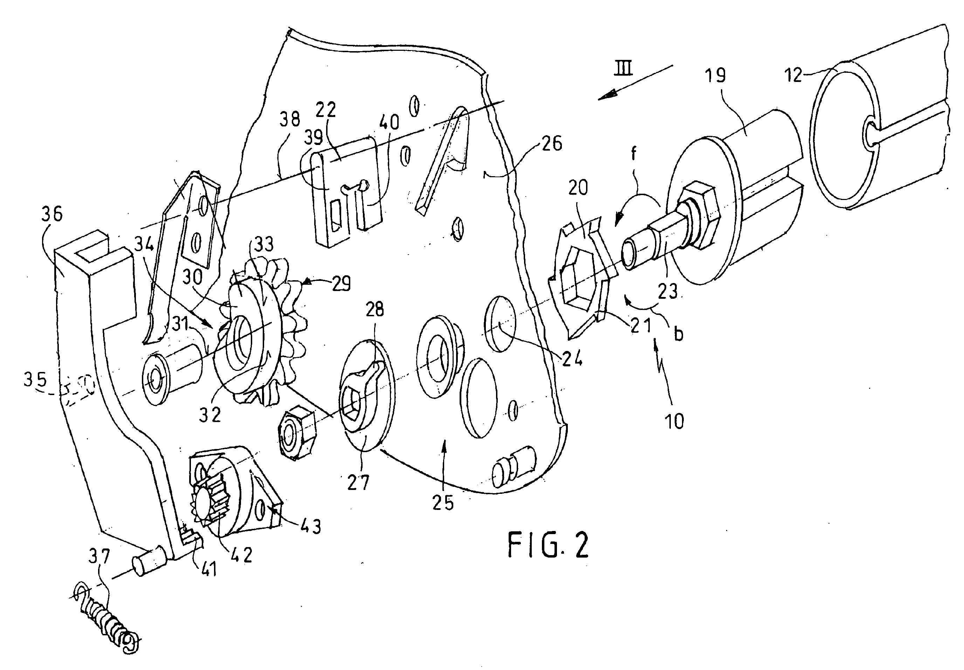

Die in den Figuren in ihrer Gesamtheit mit 10 bezeichnete Kfz-Sicherheitseinrichtung wird beispielsweise, insbesondere für den Fall, daß es sich um eine Kfz-Trenneinrichtung nach Art eines Sicherheitsnetzes handelt, an einer Rückenlehne 14 eines Kfz 15 befestigt. Üblicherweise befindet sich dabei die Wickelwelle 12 (Fig. 2) in einem Gehäuse 11, welches in der Fig. 1 angedeutet ist. Das Gehäuse 11 kann dabei, wie in Fig. 1 gezeigt, auf der Rückseite R der Rückenlehne 14 etwa im Bereich des oberen freien Endes der Rückenlehne 14 angeordnet sein.

Bei in aufrechter Position befindlicher Rückenlehne 14 (gestrichelt dargestellt) kann das Sicherheitsnetz 13 entsprechend einer vorbestimmten Ausziehlänge l₁ ausgezogen werden, und überbrückt auf diese Weise den Abstand zwischen dem Rollogehäuse 11 und dem Kfz-Himmel 17. Im Kfz-Himmel 17 sind Einhäng-Aufnahmen 18 vorgesehen, in denen beispielsweise die Enden einer Netz-Haltestange festgelegt, insbesondere eingehängt werden können. Diese Aufnahmen 18 zeigt Fig. 1 lediglich schematisch.

Für den Fall, daß die Rückenlehne 14 in eine in Fahrtrichtung X des Kfz nach vorne verschwenkte Lage, in der sie im wesentlichen horizontal angeordnet ist, verschwenkt wird, wird der Abstand zwischen den Einhäng-Aufnahmen 18 und dem Rollogehäuse 11 größer als die vorbestimmte Ausziehlänge L₁. Das Kfz-Sicherheitsnetz 13 muß entsprechend einer zweiten Ausziehlänge I₂ ausgezogen werden.

Fig. 1 zeigt die beiden unterschiedlichen Lagen der Rückenlehne 14 mit entsprechend ausgezogenem Kfz-Sicherheitsnetz 13, wobei für die beiden unterschiedlichen Positionen der Rückenlehne 14 unterschiedliche Einhäng-Aufnahmen 18 vorgesehen sind. Grundsätzlich ist es auch denkbar, nur ein Paar von Einhäng-Aufnahmen 18, beispielsweise die in bezüglich Fig. 1 rechts dargestellten Einhäng-Aufnahmen 18 vorzusehen, so daß bei in horizontaler Position befindlicher Rückenlehne 14 das Kfz-Sicherheitsnetz 13 in eingehängter Position zur Fahrtrichtung geneigt angeordnet wäre.

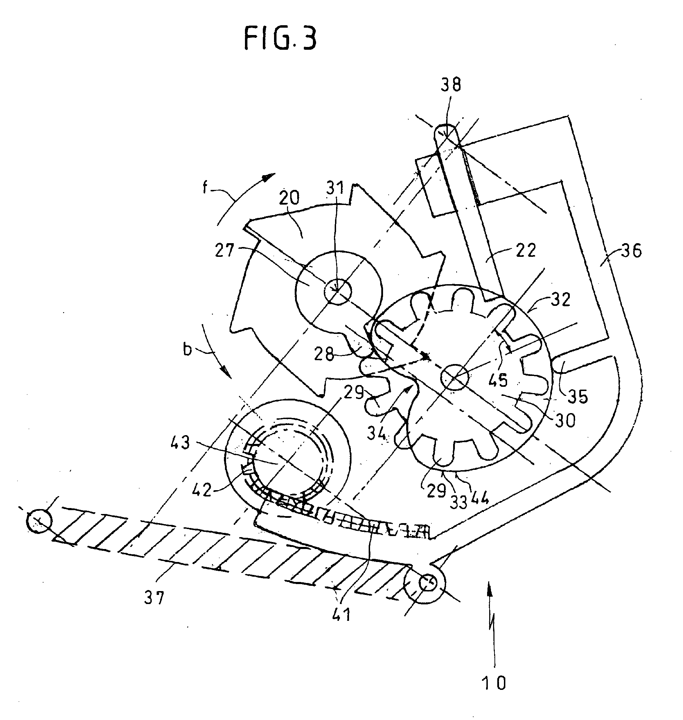

An Hand der Fig. 2 bis 4 soll nunmehr der Aufbau der Kfz-Sicherheitseinrichtung erläutert werden:
Vorzugsweise an einem der beiden axialen Enden der Wickelwelle 12 befindet sich ein Aufbau, wie in Fig. 2 in Explosionsansicht darstellt. Grundsätzlich ist es jedoch auch möglich, einen derartigen Mechanismus an beiden axialen Enden der Wickelwelle 12, die sich üblicherweise im wesentlichen über die gesamte Fahrzeugbreite erstreckt, anzuordnen.
Gemäß Fig. 2 ist drehfest mit der abgebrochen dargestellten Wickelwelle 12 ein Adapter 19 verbunden, auf welchem, drehfest mit diesem verbunden, eine Rastscheibe 20 angeordnet ist. Die Rastscheibe 20 umfaßt eine Vielzahl von Sperrzähnen 21, die jeweils eine flache und eine steile Flanke aufweisen. Die unterschiedliche Steilheit der Flanken sorgt durch Zusammenwirken mit der Sperrklinke 22, worauf später eingegangen wird, dafür, daß eine Aufwickelbewegung des Sicherheitsnetzes 13 durch eine Drehbewegung der Wickelwelle 12 im Drehsinne des Pfeiles f jederzeit möglich ist, eine Abwickelbewegung durch eine Drehung der Wickelwelle 12 im entgegengesetzten Drehsinne b jedoch unter Umständen verhindert ist.
Ein Wellenstumpf 23 des Adapters 19 durchgreift eine Öffnung 24 in einer Montageplatte 25. Auf der dem Betrachter der Fig. 2 zugewandten Seite 26 der Montageplatte 25 sind sämtliche Bauelemente angeordnet, die im folgenden beschrieben werden:
   Ein Antriebsrad 27 weist lediglich einen einzigen Zahn 28 auf und ist drehfest zu dem Adapter 19 auf dessen Wellenstumpf 23 angeordnet. Der Zahn 28 wirkt mit der Verzahnung 29 eines Nockenelementes 30 zusammen, welches um eine Achse 31 drehbar ist. Jeweils eine volle Umdrehung der Wickelwelle 12 und somit des Antriebsrades 27 sorgt dafür, daß das Nockenelement 30 um einen bestimmten Drehwinkel 45 (Fig. 3) gedreht wird. Dieser Drehwinkel entspricht dabei dem Drehwinkelsegment, welches von zwei benachbarten Zähnen der Verzahnung 29 gebildet wird.

Das Nockenelement 30 stellt eine Steuerkurve 32 bereit, die bei axialer Betrachtung (in Richtung der Achse 31) der Verzahnung 29 unmittelbar benachbart ist. Die Steuerkurve 32 umfaßt dabei einen Abschnitt 33 mit im wesentlichen konstanten Radius, der sich über etwa 270 Grad erstreckt. Außerdem gehört zu der Steuerkurve 32 eine Ausnehmung 34, die einen Abschnitt mit kleinerem Radius darstellt (Fig. 3).

Mit der Steuerkurve 32 wirkt ständig ein Nockenfolger 35 eines Steuerhebels 36 zusammen. Der Steuerhebel 36 ist über ein Federelement 37 ständig zur Steuerkurve 32 hin belastet.

Der Steuerhebel 36 kooperiert mit der Sperrklinke 22 und ist gemeinsam mit dieser um die Schwenkachse 38 schwenkbar. Die Sperrklinke 22 ist dabei im wesentlichen U-förmig ausgebildet und befindet sich zu etwa gleichen Teilen auf beiden Seiten der Montageplatte 25, so daß sie diese durchgreift. Mit ihrem bezüglich Fig. 2 linken U-Schenkel 39 kooperiert die Sperrklinke 22 mit dem Steuerhebel 36 und mit ihrem bezüglich Fig. 2 rechten U-Schenkel 40 kooperiert die Sperrklinke 22 mit der Rastscheibe 20.

An dem bezüglich Fig. 2 unteren Ende des Steuerhebels 36, also im wesentlichen unter maximalem Abstand zu seiner Schwenkachse 38 weist der Steuerhebel 36 eine Verzögerungsverzahnung 41 auf. Diese Verzögerungsverzahnung 41 kooperiert mit der Verzahnung 42 eines Bewegungsverzögerers 43, welcher unmittelbar an der Montageplatte 25 befestigt ist.

Fig. 3 zeigt eine Position der Sperrklinke 22 in Freilaufstellung, in der die Sperrklinke 22 von der Rastscheibe 20 beabstandet ist. Diese Freilaufstellung der Sperrklinke 22 wird dadurch gewährleistet, daß der Nockenfolger 35 des Steuerhebels 36 auf dem Abschnitt 33 größeren Radius der Steuerkurve 32 anliegt.

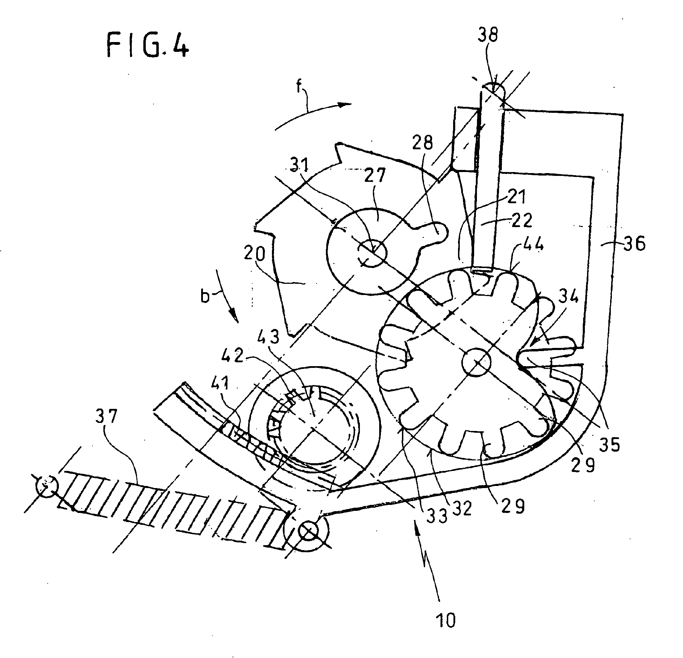

Für den Fall, daß eine Rotation des Nockenelementes 30 ausgehend von einer Drehumfangsstellung gemäß Fig. 3 um einen Drehwinkel von etwa 180 Grad durchgeführt wird, kommt der Nockenfolger 35 mit der Ausnehmung 34 in Eingriff, so daß die Einfallbewegung der Sperrklinke 22 in ihre Sperrposition gemäß Fig. 4 hinein nicht mehr verhindert ist. Das Einfallen der Sperrklinke erfolgt jedoch zeitverzögert, da die Verzögerungsverzahnung 41 des Steuerhebels 36 mit der Verzahnung 42 des Bewegungsverzögerers 43, der z.B. als Fettbremse ausgebildet ist, zusammenwirkt.

### Die Funktionsweise der Vorrichtung ist etwa wie folgt:

Ausgehend von einer Lage der Rückenlehne 14, bei der sich diese im wesentlichen in vertikaler Position befindet, ist das Sicherheitsnetz 13 zunächst vollständig aufgewickelt. Das Nockenelement 30 befindet sich dabei in einer Null-Stellung, die in den Figuren nicht dargestellt ist. Die Null-Stellung des Nockenelementes 30 entspricht etwa einer um ca. 90 Grad bezüglich Fig. 3 entgegen dem Uhrzeigersinn um die Schwenkachse 31 verdrehten Nockenelement 30. In dieser Null-Stellung gerät der Nockenfolger 35 des Steuerhebels 36 mit einem Abschnitt 44 der Steuerfläche 32 in Kontakt, der der Ausnehmung 34 unmittelbar benachbart ist. Der Abschnitt 44 der Steuerkurve 32 sorgt dafür, daß in dieser Null-Stellung die Sperrklinke 22 in Freilaufstellung gehalten wird, ein Abziehen der Werkstoffbahn 13 in Abwickelrichtung b von der Wickelwelle 12 demzufolge möglich ist.

Der Benutzer kann nunmehr ein am freien Ende der Werkstoffbahn 13 angeordnetes Endelement, beispielsweise eine Netz-Haltestange, ergreifen und das Netz 13 ausziehen. Die Wickelwelle 12 und dementsprechend auch das Antriebsrad 27 führen demzufolge eine Drehbewegung im Drehsinne des Pfeiles b um die Achse 31 herum durch. Durch Eingriff des Zahnes 28 des Antriebsrades 27 mit der Verzahnung 29 des Nockenelementes 30 wird bei einer vollen Umdrehung des Antriebsrades 27 entgegen dem Uhrzeigersinn das Nockenelement 30 mit dem Uhrzeigersinn um einen Schrittwinkel 45 gedreht.

Die Verzahnungen 28, 29 von Antriebsrad und Nockenelement sind derart aufeinander abgestimmt, daß nach einer bestimmten Anzahl Umdrehungen der Wickelwelle 12, die einer vorbestimmten Ausziehlänge l₁ des Netzes 13 entsprechen, das Nockenelement 30 einer Drehung von nahezu 360 Grad (beim Ausführungsbeispiel etwa 315 Grad) durchlaufen hat. Das Nockenelement 30 ist ausgehend von der nicht dargestellten Null-Stellung um etwa 315 Grad im Uhrzeigersinn verdreht worden, so daß eine Stellung gemäß Fig. 3 durchlaufen worden ist und schließlich eine Umfangsdrehstellung des Nockenelementes 30, wie in Fig. 4 dargestellt, erreicht wird. Der Nockenfolger 35 erreicht, da der Steuerhebel 36 vom Federelement 37 in Einfall-Rrichtung belastet ist, den Grund der Ausnehmung 34, so daß die Sperrklinke 22 in ihre Sperrstellung gemäß Fig. 4 hinein einfallen kann. Die Einfallbewegung erfolgt, wie oben beschrieben, auf Grund des Bewegungsverzögerers 43 verlangsamt.

Für den Fall, daß die Werkstoffbahn 13 aus ihrer aufgespannten Gebrauchslage nunmehr aufgerollt werden soll, greift der Benutzer z.B. die Haltestange und kann die Werkstoffbahn 13 unter Ausübung der Rückzugskraft des nicht dargestellten Federmotors der Wickelwelle 12 aufwickeln. Die flachen Steigungen der Sperrzähne 21 der Rastscheibe 22 können dabei an der Sperrklinke 22 entlanggleiten, wobei durch die Aufwickelbewegung das Nockenelement 30 entgegen dem Uhrzeigersinn in seine Null-Stellung zurückgedreht wird.

Das Antriebsrad 27 und das Nockenelement 30 wirken insoweit als Zählmechanismus, welcher die jeweils aktuelle Ausziehlänge der Werkstoffbahn 13 durch Zählen der Umdrehungen der Wickelwelle 12 feststellt.

Für den Fall, daß sich die Rückenlehne 14 des Kfz-Sitzes 15 in im wesentlichen horizontaler Position befindet (in Fig. 1 in durchgezogenen Linien dargestellt) und die Werkstoffbahn 13 bis zu einer Ausziehlänge l₂, welche größer ist als die vorbestimmte Ausziehlänge l₁, ausgezogen werden soll, verläuft die Handhabung analog. Ausgehend von der zuvor beschriebenen Null-Stellung des Nockenelementes 30 kann die Werkstoffbahn 13 nunmehr kontinuierlich abgezogen werden, ohne daß es zu der Sperrung der Wickelwelle 12 kommt. Während der Ausziehbewegung der Werkstoffbahn bis zur Ausziehlänge l₂ durchläuft das Nockenelement 30 eine Drehung um mehr als 360 Grad, so daß in der bezüglich Fig. 1 linken Einhängeposition des Netzes 13 eine Drehumfangsstellung des Nockenelementes 30 erreicht wird, bei der der Nockenfolger 35 auf einem Abschnitt 33 der Steuerkurve 32 anliegt, der ein Einfallen der Sperrklinke 22 verhindert. Eine Sperrung der Wickelwelle ist in diesem Fall jedoch nicht mehr notwendig, da in dieser Gebrauchsposition kein weiterer Vorrat (Überlänge) an Werkstoffbahn auf der Wickelwelle 12 angeordnet ist.
Während der Ausziehbewegung der Werkstoffbahn 13 in einem Zug bis zur zweiten Ausziehlänge l₂ gerät zwar der Nockenfolger 35 kurzfristig in den Bereich der Ausnehmung 34 der Nockenscheibe 30. Auf Grund des Bewegungsverzögerers 43 kommt es jedoch nicht zu einem Einfallen der Sperrklinke 22 in ihre Sperrposition.

Die erfindungsgemäße Kfz-Sicherheitseinrichtung 10 erlaubt eine Konstruktion mit einer nur sehr geringen Anzahl von Bauteilen, so daß eine einfache Montage möglich wird. Außerdem kann auf diese Weise eine besonders flache und damit raumsparende Bauweise erreicht werden. Schließlich kann auf aufwendige Federn verzichtet werden, die eine preiswerte Herstellung einer erfindungsgemäßen Kfz-Sicherheitseinrichtung 10 ermöglichen.

## Patentansprüche

1. Kfz-Sicherheitseinrichtung (10), insbesondere Kfz-Sicherheitsnetz, mit einer eine flexible, abziehbare Werkstoffbahn (13) tragenden Wickelwelle (12), die drehfest mit einer Rastscheibe (20) verbunden ist, die mit einer zwischen einer Freilaufstellung (Fig. 3) und einer Sperrstellung (Fig. 4) verlagerbaren Sperrklinke (22) kooperiert, und mit einem Zählmechanismus, der ein drehfest mit der Wickelwelle (12) verbundenes Antriebsrad (27) und ein eine Steuerkurve (32) aufweisendes, angetriebenes Nockenelement (30) umfasst, wobei die Steuerkurve (32) bei vollständig aufgewickelter Werkstoffbahn (12) die Sperrklinke (22) in ihrer Freilaufstellung hält, und wobei die Steuerkurve (32) ein Einfallen der Sperrklinke (22) in ihre Sperrposition hinein zulässt, wenn die Werkstoffbahn (13) bis zu einer vorbestimmten Ausziehlänge (I₁) ausgezogen ist, **dadurch gekennzeichnet, dass** der Sperrklinke (22) ein Bewegungsverzögerer (43) zugeordnet ist, der die Einfallbewegung der Sperrklinke (22) von ihrer Freilaufstellung in ihre Sperrstellung hinein verlangsamt.

2. Kfz-Sicherheitseinrichtung nach Anspruch 1, **dadurch gekennzeichnet, daß** die Sperrklinke (22) schwenkbar ausgebildet ist.

3. Kfz-Sicherheitseinrichtung nach Anspruch 2, **dadurch gekennzeichnet, daß** mit der Sperrklinke (22) ein Steuerhebel (36) zusammenwirkt, der gemeinsam mit der Sperrklinke (22) um die Achse (38) der Sperrklinke schwenkbar ist.

4. Kfz-Sicherheitseinrichtung nach Anspruch 3, **dadurch gekennzeichnet, daß** dem Steuerhebel (36) eine Verzögerungsfläche, insbesondere eine Verzögerungsverzahnung (41) zugeordnet ist.

5. Kfz-Sicherheitseinrichtung nach einem der vorangegangenen Ansprüche, **dadurch gekennzeichnet, daß** sich die Steuerkurve (32) über einen Drehwinkelbereich von etwa 360° erstreckt.

6. Kfz-Sicherheitseinrichtung nach einem der vorangegangenen Ansprüche, **dadurch gekennzeichnet, daß** das Nockenelement (30) drehgelagert ist.

7. Kfz-Sicherheitseinrichtung nach Anspruch 6, **dadurch gekennzeichnet, daß** eine Ausziehbewegung der Werkstoffbahn (13) bis zu der vorbestimmten Ausziehlänge (I₁) im wesentlichen einer Drehung der Steuerkurve (32) und/oder des Nockenelementes (30) um nahezu 360° entspricht.

8. Kfz-Sicherheitseinrichtung nach einem der vorangegangenen Ansprüche, **dadurch gekennzeichnet, daß** die Werkstoffbahn (13) bis zu einer zweiten Ausziehlänge (I₂) ausziehbar ist, die größer ist als die vorbestimmte Ausziehlänge (I₁).

9. Kfz-Sicherheitseinrichtung nach Anspruch 8, **dadurch gekennzeichnet, daß** die Ausziehbewegung der Werkstoffbahn (13) bis zu der zweiten Ausziehlänge (I₂) einer Drehung der Steuerkurve (32) und/oder des Nockenelementes (30) um mehr als 360° entspricht.

10. Kfz-Sicherheitseinrichtung nach einem der vorangegangenen Ansprüche, **dadurch gekennzeichnet, daß** die Steuerkurve (32) bezüglich einer Drehachse (31) des Nockenelementes (30) einen Abschnitt (33) mit im wesentlichen konstanten Radius besitzt und eine Ausnehmung (34) mit geringerem Radius aufweist.

## Claims

1. Car safety device (10), in particular a car safety net, with a winding shaft (12) carrying a flexible, pull-off fabric web (13) and being connected non-rotatably to a ratchet wheel (20) that cooperates with a locking pawl (22) movable between a freewheeling position (Fig. 3) and a locking position (Fig. 4), and with a counter mechanism that comprises a drive wheel (27) connected non-rotatably to the winding shaft (12) and a driven cam element (30) having a control cam (32), where said control cam (32) holds the locking pawl (22) in its freewheeling position when the fabric web (12) is completely wound on and where the control cam (32) allows the locking pawl (22) to drop into its locking position when the fabric web (13) is pulled out up to a predetermined pull-out length (I₁), **characterized in that** the' locking pawl (22) is assigned a movement time-delay mechanism (43) that slows the dropping movement by the locking pawl (22) from its freewheeling position into its locking position.

2. Car safety device according to Claim 1, **characterized in that** the locking pawl (22) is designed swivelable.

3. Car safety device according to Claim 2, **characterized in that** a control lever (36) interacts with the locking pawl (22) and is swivelable together with the locking pawl (22) about the axis (38) of the locking pawl.

4. Car safety device according to Claim 3, **characterized in that** the control lever (36) is assigned a time-delay surface, in particular a time-delay gearing (41).

5. Car safety device according to one of the preceding claims, **characterized in that** the control cam (32) extends over a rotation angle range of around 360°.

6. Car safety device according to one of the preceding claims, **characterized in that** the cam element (30) is rotatably mounted.

7. Car safety device according to Claim 6, **characterized in that** a pull-out movement of the fabric web (13) up to a predetermined pull-out length (I₁) corresponds substantially to a rotation of the control cam (32) and/or of the cam element (30) about almost 360°.

8. Car safety device according to one of the preceding claims, **characterized in that** the fabric web (13) can be pulled out to a second pull-out length (I₂) that is greater than the predetermined pull-out length (I₁).

9. Car safety device according to Claim 8, **characterized in that** the pull-out movement of the fabric web (13) to the second pull-out length (I₂) corresponds to a rotation of the control cam (32) and/or of the cam element (30) about more than 360°.

10. Car safety device according to one of the preceding claims, **characterized in that** the control cam (32) has relative to a rotation axis (31) of the cam element (30) a section (33) with substantially constant radius and a recess (34) with smaller radius.

## Revendications

1. Dispositif de sécurité pour véhicule (10), en particulier filet de sécurité pour véhicule, avec un arbre d'enroulement (12) portant une bande de matière (13) souple et déroulable, et relié de manière solidaire en rotation à un disque cranté (20), et qui coopère avec un cliquet d'arrêt (22) mobile entre une position de roue libre (Fig. 3) et une position de blocage (Fig. 4), et avec un mécanisme de comptage comprenant une roue menante (27) reliée de manière solidaire en rotation à l'arbre d'enroulement (12), et un élément à ergots (30) mené présentant une came de commande (32), sachant que la came de commande (32) maintient le cliquet d'arrêt (22) dans sa position de roue libre quand la bande de matière (12) est entièrement enroulée, et que la came de commande (32) permet un enclenchement du cliquet d'arrêt (22) dans sa position de blocage quand la bande de matière (13) est déroulée sur une longueur de déroulement (l₁) prédéfinie, **caractérisé en ce que** le cliquet d'arrêt (22) est associé à un ralentisseur de mouvement (43) qui ralentit le mouvement d'enclenchement du cliquet d'arrêt (22) de sa position de roue libre dans sa position de blocage.

2. Dispositif de sécurité pour véhicule selon la revendication 1, **caractérisé en ce que** le cliquet d'arrêt (22) est pivotant.

3. Dispositif de sécurité pour véhicule selon la revendication 2, **caractérisé en ce qu'**avec le cliquet d'arrêt (22) coopère un levier de commande (36) qui peut pivoter avec le cliquet d'arrêt (22) autour de l'axe (38) du cliquet d'arrêt.

4. Dispositif de sécurité pour véhicule selon la revendication 3, **caractérisé en ce qu'**au levier de commande (36) est associée une surface de ralentissement, en particulier une denture de ralentissement (41).

5. Dispositif de sécurité pour véhicule selon l'une des revendications précédentes, **caractérisé en ce que** la came de commande (32) s'étend sur un angle de rotation d'environ 360°.

6. Dispositif de sécurité pour véhicule selon l'une des revendications précédentes, **caractérisé en ce que** l'élément à ergots (30) est logé de manière pivotante.

7. Dispositif de sécurité pour véhicule selon la revendication 6, **caractérisé en ce qu'**un mouvement de déroulement de la bande de matière (13) jusqu'à la longueur de déroulement prédéfinie (I₁) correspond sensiblement à une rotation de la came de commande (32) et/ou de l'élément à ergots (30) presque égale à 360°.

8. Dispositif de sécurité pour véhicule selon l'une des revendications précédentes, **caractérisé en ce que** la bande de matière (13) peut être déroulée sur une seconde longueur de déroulement (I₂) qui est supérieure à la longueur de déroulement prédéfinie (I₁).

9. Dispositif de sécurité pour véhicule selon la revendication 8, **caractérisé en ce que** le mouvement de déroulement de la bande de matière (13) jusqu'à la seconde longueur de déroulement (I₂) correspond à une rotation de la came de commande (32) et/ou de l'élément à ergots (30) supérieure à 360°.

10. Dispositif de sécurité pour véhicule selon l'une des revendications précédentes, **caractérisé en ce que,** par rapport à une axe de rotation (31) de l'élément à ergots (30), la came de commande (32) présente une zone (33) ayant un rayon essentiellement constant et un évidement (34) ayant un plus faible rayon.
